# EUROPEAN PATENT APPLICATION

(11) **EP 3 190 517 A1**
(43) Date of publication of application: **12.07.2017**
(21) Application number: 16150211.7
(22) Date of filing: 05.01.2016
(51) Int. Cl.: G06F 9/50, G06F 9/54, H04L 29/08

(54) **PROVIDING ACCESS TO USER RELATED DATA**

(71) Applicant: Zeeris Oy, 00150 Helsinki (FI)
(72) Inventor: Solapuro, Riku, 00150 Helsinki (FI); Boskovic, Zeljko, 00150 Helsinki (FI)
(74) Representative: Papula Oy

(57) **Abstract**

According to an aspect, there is provided a system for managing user related data. The system comprises at least one user data storage, a connection module and a third party service connector module for enabling a connection to at least one third party service comprising user related data. The connection module is configured to receive access rights to at least one third party service, the third party service connector module is configured access the at least one third party service with the received access rights and to receive user related data from the at least one third party service using the received access rights, the at least one user data storage is configured to store the received user related data; and the connection module is configured to enable access for a device application to the user related data stored in the at least one user data storage.

## Description

### BACKGROUND

A user may install various applications to his/her device, for example, to a mobile phone. An application may store data relating to the user or to the user's activities on a memory of the device. Often this information or some information is stored also on external data storage accessible with the application via a network connection, for example, via the Internet. For example, if the application is a sports watch application and the sports watch measures the user's pulse rate, pulse rate information relating to the user may be stored on a cloud service of the sports watch application provider. However, the data stored about the user is available only at the specific application that was used to store the data. Further, if the user deletes the application, the user may not have any more access to the data stored with the application.

Further, data relating a single user may be stored in multiple services accessible via a data network, and the data in a single service needs to be separately accessed by the user if the user wishes to access the data.

### SUMMARY

The following presents a summary of the disclosure in order to provide a basic understanding to the reader. This summary is not an extensive overview of the disclosure and it does not identify key/critical elements or delineate the scope of the description. The purpose is to present concepts disclosed herein as a prelude to the more detailed description that is presented later.

According to a first aspect, there is provided a system for managing user related data. The system comprises at least one data storage, a connection module and a third party service connector module for enabling a connection to at least one third party service comprising user related data. The connection module is configured to receive access rights to at least one third party service, the third party service connector module is configured to access the at least one third party service with the received access rights and to receive user data from the at least one third party service using the received access rights, the at least one data storage is configured to store the received user related data; and the connection module is configured to enable access for a device application to the user related data stored in the at least one data storage.

In one embodiment, the connection module is configured to receive the access rights to the at least one third party service from the device application.

In one embodiment, alternatively or in addition, the connection module is configured to receive the access rights to the at least one third party service from a network service providing a user account registration service.

In one embodiment, alternatively or in addition, the system is configured to tag the stored user related data with a unique identifier identifying the user and masking the real user identity of the user.

In one embodiment, alternatively or in addition, the system is configured to periodically request via the third party service connector module updated user related data from the third party service.

In one embodiment, alternatively or in addition, the system is configured to receive via the third party service connector module updated user related data from the third party service and to update the user related data in the at least one data storage based on the received updated user related data.

In one embodiment, alternatively or in addition, the system is configured to notify via the connector module the device application when updated user related data is available.

In one embodiment, alternatively or in addition, the system is configured to receive via the connector module a request from the device application to receive updated user related data.

According to a second aspect, there is provided a method for enabling access to at least one service. The method comprises receiving, by at least one processor, an indication of service solutions supported by a system accessible via a data network, the system storing user related data, determining, by the at least one processor, service solutions supported by a device, requesting from a user of the device, by the at least one processor, access rights to the service solutions supported by the device, and causing transmission, by the at least one processor, of the obtained access rights relating to the service solutions supported by the device to the system to enable the system to access at least one third party service using the access rights.

In one embodiment, wherein determining, by the at least one processor, service solutions supported by the device, comprises reading device data, and determining the service solutions supported by the device based on the read device data.

In one embodiment, alternatively or in addition, wherein determining, by the at least one processor, service solutions supported by the user device, comprises providing an indication of the service solutions supported by the system to the user, and receiving from the user a selection of at least one service solution supported by the system.

In one embodiment, alternatively or in addition, the method further comprises detecting, by the at least one processor, an event in the usage of the device, and causing transmission, by the at least one processor, of a request to the system to access at least one third party service enabling the network service to retrieve updated user related data from the at least one third party service.

In one embodiment, alternatively or in addition, the method further comprises detecting, by the at least one processor, an action executed by the user with the device, determining, by the at least one processor, that the action requires data stored relating to the user from the system, causing transmission, by the at least one processor, of a request for the data stored relating to the user from the system, and completing the action by using the data stored relating to the user using the data received from the system.

According to a third aspect, there is provided a computer program comprising instructions executable by a computing device to cause the computing device to receive an indication of service solutions supported by a system accessible via a data network, the system storing user related data, determine service solutions supported by a device, request from a user of the device access rights to the service solutions supported by the device, and cause transmission of the obtained access rights relating to the service solutions supported by the user device to the system to enable the system to access at least one third party service using the access rights and receive and store user related data from the at least one third party service.

In one embodiment, the computer program is embodied on a computer-readable medium.

According to a fourth aspect, there is provided a method for managing user related data. The method comprises receiving access rights to at least one third party service, accessing the at least one third party service with the received access rights, requesting user related data from the at least one third party service using the received access rights, storing the received user related data in at least one data storage, and enabling access for a device application to the user related data stored in the at least one data storage.

According to a fifth aspect, there is provided a computer program comprising instructions executable by a computing device to cause the computing device to receive access rights to at least one third party service, access the at least one third party service with the received access rights, request user related data from the at least one third party service using the received access rights, store the received user related data in at least one data storage, and enabling access for a device application to the user related data stored in the at least one data storage.

In one embodiment, the computer program is embodied on a computer-readable medium.

According to a sixth aspect, there is provided a system for managing user related data. The system comprises a system according to the first aspect and a device application configured to perform the method of the second aspect.

According to a seventh aspect, there is provided an apparatus for managing user related data. The apparatus comprises means for receiving access rights to at least one third party service, means for accessing the at least one third party service with the received access rights, means for requesting user related data from the at least one third party service using the received access rights, means for storing the received user related data in at least one data storage, and means for enabling access for a device application to the user related data stored in the at least one data storage.

According to an eight aspect, there is provided an apparatus for enabling access to at least one service. The apparatus comprises means for receiving an indication of service solutions supported by a system accessible via a data network, the system storing user related data, means for determining service solutions supported by a device, means for requesting from a user of the device access rights to the service solutions supported by the device, and means for causing transmission of the obtained access rights relating to the service solutions supported by the device to the system to enable the system to access at least one third party service using the access rights.

The means discussed above may be implemented using at least one processor, or at least one processor and at least one memory comprising program code connected to the at least processor.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. The embodiments described below are examples only and the scope of protection shall not be limited to the presented embodiments. In the drawings:
**FIG. 1A** illustrates a system for managing user data.
**FIG. 1B** illustrates the user data storage in more detail.
**FIG. 2** illustrates a system for managing user related data.
**FIG. 3** discloses a flow diagram illustrating master application installation.
**FIG. 4** illustrates an embodiment for detecting a service.
**FIG. 5** illustrates an embodiment for detecting a service.
**FIG. 6** illustrates an embodiment when the user starts using the master application.
**FIG. 7** illustrates an embodiment where a new application is installed in the user device, and the master application already exists in the device at that point.
**FIG. 8** illustrates an embodiment where the network server uses user's access rights to access a third party service storing data relating to the user.

Like reference numerals are used to designate like parts in the accompanying drawings.

### DETAILED DESCRIPTION

The detailed description provided below in connection with the drawings is intended as a description of the embodiments presented herein and is not intended to represent the only forms in which the present invention may be constructed or utilized. However, the same or equivalent functions and sequences may be accomplished by different embodiments.

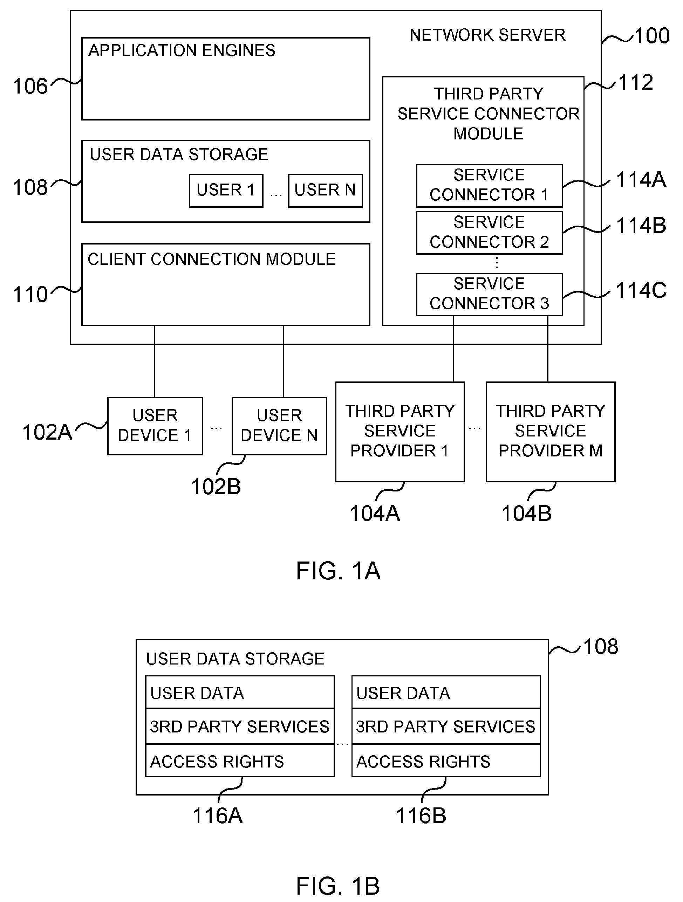

FIG. 1A illustrates a system for managing user data. The system comprises a network server 100, one or more devices 102A, 102B and one or more third party service providers 104A, 104B. The user device 102A, 102B refers to any device that can be used by a user, for example, a mobile device, a mobile phone, a tablet computer, a personal computer etc. A single user may use one or more user devices.

The third party service provider 104A, 104B may refer to application service provider that provides an application for the device 102A, 102B and stores user related data in its cloud data storage. For example, a user may use a sports watch and a mobile device used by the user includes a sports application provided by the sports watch manufacturer. When the user uses his sports watch, user activity data may be stored by the mobile device and transferred from the mobile device to a cloud service of the sports watch manufacturer.

Another example of a third party service provider includes a social media application provider. The user's mobile device may include a social media application, and the social media application may be in contact with the social media application provider via a network connection, for example, via the Internet. The social media application provider stores in its data storage information about the user and the usage of the social media application. The third party service provider 104A, 104B may also refer to a cloud data storage, a cloud service or any other service or application provider that stores user related information.

The network server 100 comprises one or more application engines 106 which comprise a set of applications enabling the functions performed by the network server 100. The applications may be written in any suitable programming language. A third party service connector module 112 enables the network server 100 to connect to the third party service providers 104A, 104B that store information about the users of the devices 102A, 102B. The network server 100 may also comprise at least one processor and at least one memory connected to the at least one processor, the at least one memory comprising the various application engines and application modules executable by the at least one processor. The term "user device" may also refer to any device or sensor not necessarily owned or directly used by a user but is only used to record data somehow relating to the user. For example, some technical device in a hospital might be used to record pulse rate of the user. Therefore, the device is temporarily used by the user but the data still concerns the user. Further, a sensor or device not carried by the user may store data relating to the user. For example, a surveillance camera may monitor the user's house, and the data received from the camera is regarded as user related data.

A user data storage 108 stores information about one or more users and/or their user devices. FIG. 1B illustrates and discusses the user data storage 108 in more detail.

A client connection module 110 establishes and maintains a data connection between the network server 100 and the devices 102A, 102B. More specifically, the client connection module 110 establishes and maintains a data connection between the network server 100 and a master application running on the devices 102A, 102B. The connection between the master application and the network server 100 may be encrypted using any technique available for that purpose.

The third party service connector module 112 and one or more service connectors 114A, 114B, 114C provide a connection to one or more third party service providers 104A, 104B. The service connectors 114A, 114B, 114B may be created using Application Provider Interfaces (API) provided by the third party service providers 104A, 104B. The service connectors 114A, 114B, 114C provide connections, for example, to social networks, cloud data storages, cloud servicer for peripheral devices etc.

FIG. 1B illustrates the user data storage 108 in more detail. The user data storage 108 comprises one or more user data records 116A, 116B. A user data record 116A, 116B stores various pieces of information relating to the user, for example, data generated by the user, data generated by devices used by the user and personal data. The data generated by the user comprises, for example, images, historical data etc. The data generated by the devices used by the user comprises, for example, data relating to the user's car, smart fridge, sports watch, sensors etc. The user data may also comprise, for example, blood pressure data, heart rate data, breathing rate data, cholesterol rate data etc.

The user data may store personal data relating to the user, for example, name, date of birth, primary location, vehicle type and model etc. In another embodiment, the real identity of the user is masked and the user data identifies the user only with a unique user identifier.

The user data record 116A, 116B stores also third party services supported by the user's device and the user's access rights enabling the network server 100 to access the corresponding third party service providers.

The data in the user data storage 108 may be encrypted using any available encryption technique.

The term "user related data" or "user data" may refer to user data and/or data of a device or sensor used by the user or belonging to the user. Further, the term "user data" may also refer to data of another user. For example, a first user may give a second user access rights to the data of the first user. Or, a parent may be given an inherited trust to data relating to his/her child. This means that data stored for a first user may comprise data relating to a second user. For example, the user device 102A may be used by the first user and the user device 102B may be used by the second user. There may also be a relation between the users. The first user may be a parent and the second user may be his/her child.

In one embodiment, more than one network server 100 may be provided to implement a distributed solution. If a distributed solution is used, the network servers may be located geographically in different areas or countries. Further, it is also possible to distribute only the user data storage 108 to multiple locations.

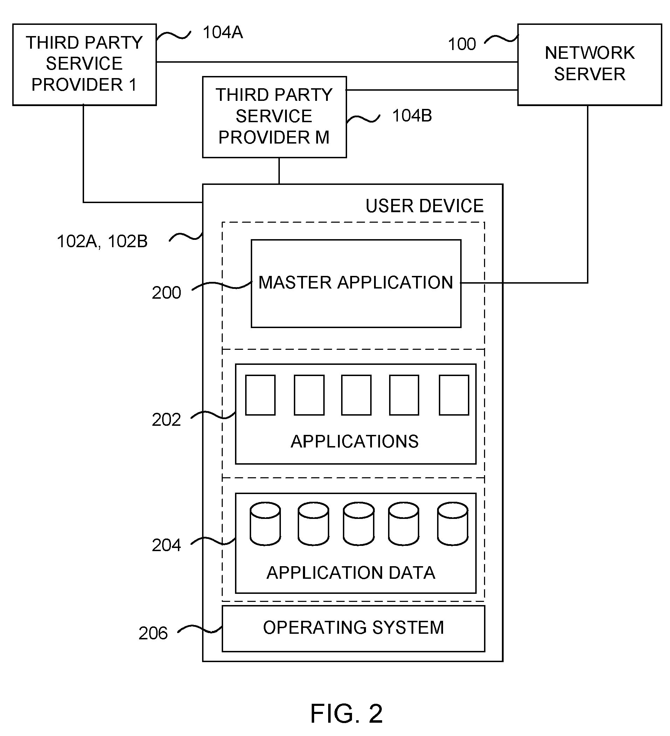

FIG. 2 illustrates a system for managing user data. The system illustrated in FIG. 2 is similar to the system illustrated in FIG. 1A, and it shows the structure of the user device 102A, 102B in more detail. The user device 102A, 102B comprises an operating system 206 which can be any of the currently or in future available operating systems. The user of the user device 102A, 102B has installed into the device one or more applications 202, and the application data 204 relating to the applications 202 is stored on the user device 102A, 102B. The applications 202 can be installed, for example, from an application store of the user device manufacturer or from any other application store or service available for the user device.

The applications 202 executed by the user device 102A, 102B may store information also to an external database managed by the third party service provider 104A, 104B. Each application provider may have a cloud service that stores information relating to the particular application usage. For example, if the user has installed a sports watch application to the user device and the sports watch generates data about the user's activities, this data may be transmitted by the sports watch application also to the sports watch application provider.

In addition to the "normal" applications installed on the user device 102A, 102B, a master application 200 may also be installed on the user device 102A, 102B. The installation of the master application may be performed normally from the application store as any other application installed on the user device 102A, 102B. Various features relating to the master application 200 will be discussed in more detail in the following. The term "master application" may relate to an application which has access to data provided by the "normal" applications.

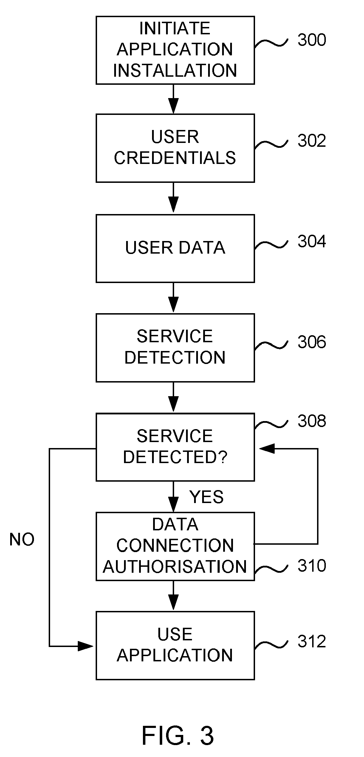

FIG. 3 discloses a flow diagram illustrating master application installation. The installation of the master application is initiated (300) by selecting it for downloading from an application store. The user may register to a master application network service while installing the application. Alternatively, the user may have earlier registered and a user account in the master application network service may have already been created for the user. When the user account has been created, the user inputs user credentials (302). After inputting the user credentials, the user may give some additional data about her/him (304), for example, weight, height, age etc. The user data may also be application specific. For example, a medical health application may require data about allergies, presence of a specific gene, previously made diagnosis etc. On the other hand, a wellness application may require data about user targets, desired weight etc.

After that service detection is started (306). The term "service" may refer to a service or application that the user is currently using and is supported by the master application and by the master application network service. The service may refer to any existing application in the user device 102A, 102B that stores information also outside the user device 102A, 102B, for example, a social media application, a sports application etc. Further, a service may also refer to a service provided by a device or sensor somehow related to the user. The device or sensor can provide an answer to a simple question, for example, is the temperature above 37 degrees Celsius, has the user taken a specific pill etc.

If no service is detected (308), the operation proceeds to block 312 where the user may start using the application. However, if at least one service is detected (308), data connection is authorized (310). This means, for example, that the user gives or has earlier given correct access rights to the network service. The given access rights may also be transmitted to the network server 100 that confirms to the master application that the access rights allow access to the corresponding third party service providers 104A, 104B.

After all services have been detected, the user may start using the master application (312).

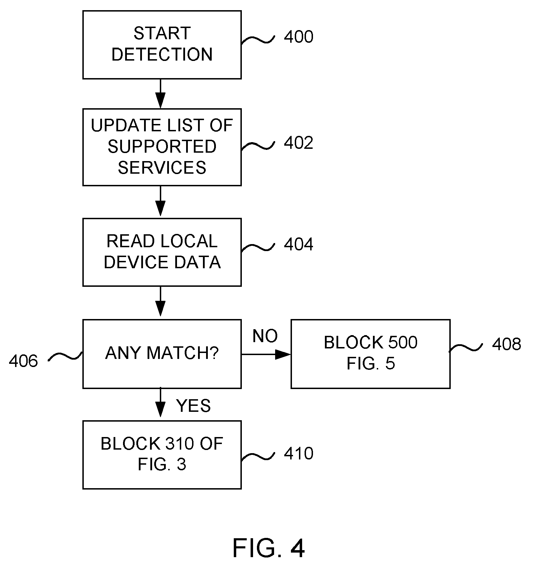

FIG. 4 illustrates an embodiment for detecting a service. The detection may be started (400) when the block 306 of FIG. 3 is entered. The master application 200 connects to the network server 100 and requests an updated list of supported services (402). The term "supported service" refers to a service provided by a third party service provider that provides an Application Programming Interface (API) via which the network server 100 can access user information stored in the service.

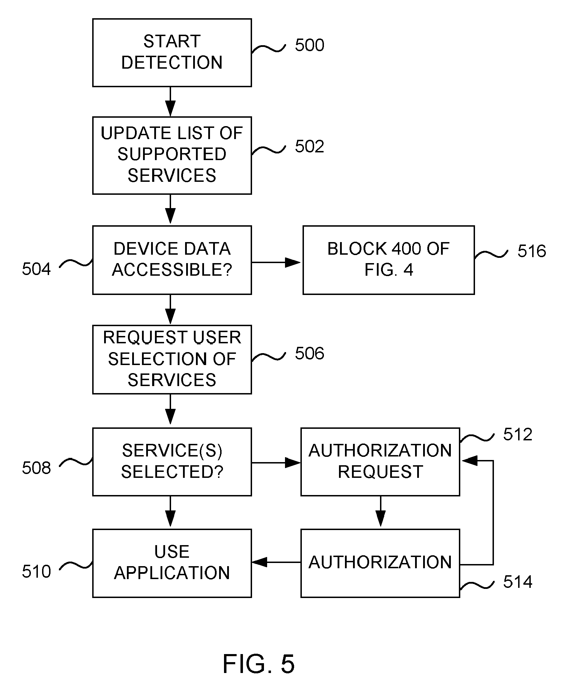

Local device data is automatically read (404) to determine which services the user device supports. This may mean detecting which applications are already stored on the user device. The list of supported services from the network server 100 is then compared to the services supported by the user device. If there is no match, the processing proceeds to block 500 of FIG. 5 (408).

If there is at least one match (406), the processing proceeds to block 310 of FIG. 3.

FIG. 5 illustrates an embodiment for detecting a service. In the embodiment of FIG. 5, it is not possible to automatically determine the services supported by the user device.

The master application 200 connects to the network server 100 and requests an updated list of supported services (502). The term "supported service" refers to a service provided by a third party service provider) that provides an Application Programming Interface (API) via which the network service 100 can access user information stored in the service.

If device data can be automatically accessed (504), the processing proceeds to block 404 of FIG. 4 (516).

However, if the device data cannot be accessed (504), the master application asks the user to select the services supported by the user device (506). If the user does not select any service (508), the user may start using the master application (510). On the other hand, if the user selects one or more services (508), the user is requested to input access right to the service (s) if the user has not done this before. The master application sends an authorization request to the network server 100 to check whether the access rights are valid (512). If the access rights are valid (514), the user may start using the master application (510).

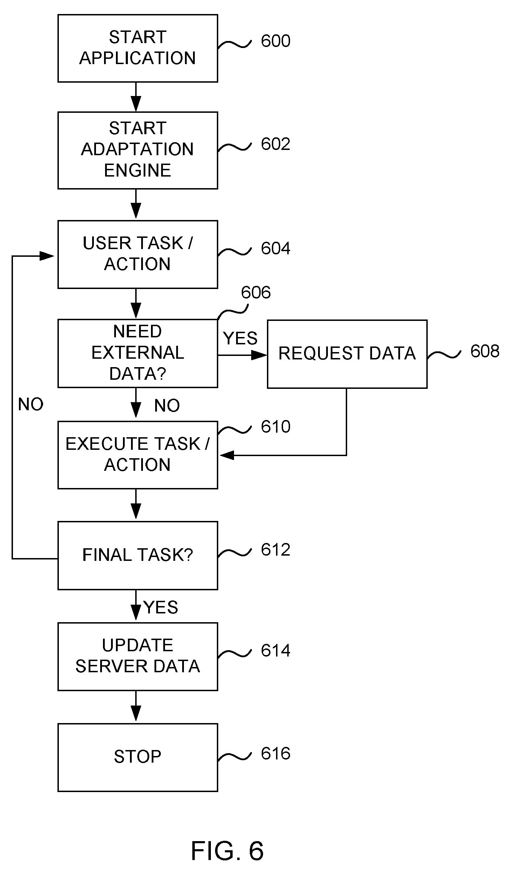

FIG. 6 illustrates an embodiment when the user starts using the master application (606).

When the application is started, an adaptation engine may also be started (602). This may mean that the master application may request from the network service any updated information relating to the user. When the user starts a task or performs an action with the master application (604), the master application checks whether any external data is needed (606). The external data may be requested from the network server 100 (608). Additionally or in addition, the master application may request the external data from any service provider that is able to provide the data (608). For example, the action may refer to a weather forecast, and it needs to be known what the forecast is for the day after tomorrow at a certain location. This data may be requested from a weather service application on the Internet or via a weather application stored on the user device.

Further, if the user, for example, performs a task to find an average pulse rate within the last five years, the master application requests from the network server 100 latest pulse rate data to make sure that the master application is able to provide a correct answer to the user. The user might have used a different heart rate measuring device and/or application for the first three years, and those years are may be missing from the master application.

As another example, the master application is a personal master application handling issues relating to personal matters of a user. If the user then wishes to determine a probability of a positive answer for mortgage free time from the bank, the personal master application may need data that is available only in some other services that have not been used earlier. For example, failed attempts to increase a limit on a credit card might be an important piece of information for the determination.

When the requested data is available for the master application, the task or action may be executed (610). If there are further tasks from the user, the master application returns back to block 604. If the task was the final task (612), the master application may update data in the network server 100 (614) before stopping execution (616). The final task status may be determined, for example, when the task is put on hold or when the user moves to another application. Updating data in the network server 100 means, for example, that location of the user, time, biological information, temperature and/or proximity to a certain element is sent to the network server 100. It is evident that the above list provides only some examples of possible updated data and that other updates, alternatively or in addition, may exist.

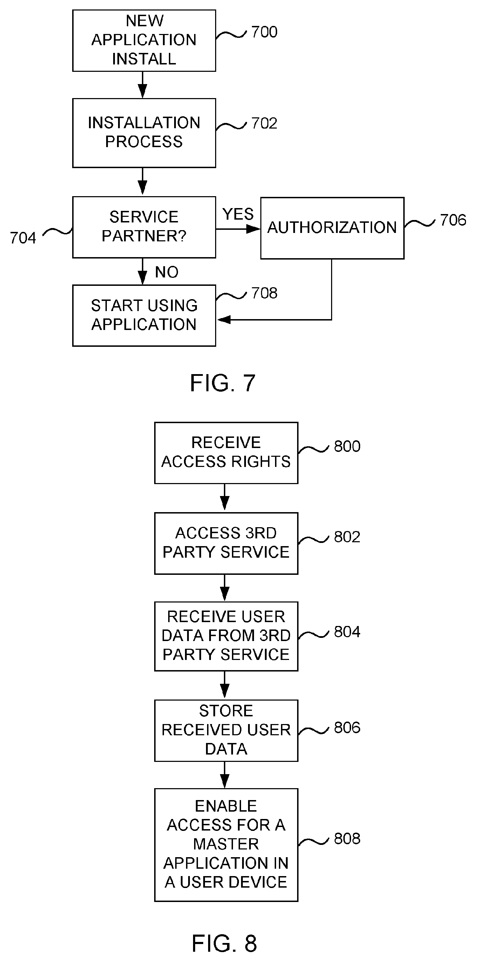

FIG. 7 illustrates an embodiment where a new application is installed in the user device, and the master application already exists in the user device at that point (700).

The installation process may be done normally as with any other application (702). After the application has been installed, the master application determines whether the application provider of the installed application is in collaboration with the network server 100 (704). If there is no connection between the installed application and the network server 100, the user may start using the installed application (708). However, if the application provider of the installed application is a service partner with the network server 100 (704), the user is requested to input access rights to the service if the user has not done this before. The master application sends an authorization request to the network server 100 to check whether the access rights are valid (706). If the access rights are valid, the user may start using the master application (708).

FIG. 8 illustrates an embodiment where the network server 100 uses user's access rights to access a third party service storing data relating to the user. The network server 100 is configured to receive access rights to at least one third party service (800). The access rights may be received by the client connection module 110 when a user installs the master application to his/her user device. Alternatively, the access rights may be received when the user registers a user account to a service that enables the user to access user data stored in various third party services. The network server 100 accesses (802) via the third party service connector module 112 the third party service providers 104A, 104B using the received access rights and receives (804) user data related to users identified by the access rights. In one embodiment, the network server 100 may send a request for user data to the third party service provider 104A, 104B. As illustrated earlier, the third party service may be a cloud service that stores user data when the user uses an application from the third party service provider with his/her device, and the application in the user device transmits data to the cloud service.

In one embodiment, step 804 may be optional and the network server 100 may not be able to store user data from the third party service provider 104A, 104B. The third party service provider 104A, 104B may allow read only access to the user data of a particular user. In this case, a data connection to the third party service provider would be established for accessing user data per need basis in close to real time when data has to be accessed.

The network server 100 stores the received user data from the third party service providers 104A, 104B in the user data storage 108 (804). The network server 100 then enables access via the client connection module 110 for a master application 200 in the user device 102A, 102B to the user data stored in the user data storage 108 (806).

In one embodiment, the network server 100 may tag the stored user data with a unique identifier identifying the user and masking the real user identity of the user. Alternatively, the network server 100 may store personal data of the user (for example, name, address, email address etc.) with the stored user data.

Since the network server 100 may not know when user data has been updated in the third party services, the network server 100 may also periodically request updated user data from the third party service. If the user data in the third party service comprises timestamps, the network server 100 is able to request updated information by requesting information newer than it currently stores. Alternatively or in addition, the network server 100 may receive via the third party service connector module 112 updated user data from the third party service and to update the user data in the user data storage 108 based on the received updated user data.

The network server 100 may also be able to combine user data and/or other data from various data sources (for example, from a home network, a dedicated network or a public network, for example, the Internet). For example, the network server 100 may store user-related data comprising blood value results, blood pressure information, temperature information etc. At the same time, the network server 100 has access to a database from at least one pharmaceutical company. By taking into account the user-related data and the data from the pharmaceutical company, the network server 100 is able to provide one or more treatment alternatives or advices for the user. As another example, the user practices cycling and intends participate a triathlon. The network server 100 receives data (for example, how often the user practices, where, length of the exercises, nature of the exercises etc.) from a third party service provider provided by the user's sports watch and stores the data about the user's exercises. Based on this information and on information from other services or manufacturers, the network server 100 is able to send the master application information about buying a more appropriate bicycle. In another example, a user has access to blood results (for example, a cholesterol level or vitamin D level) for the past three years. If the user wants to have comparative data, the master application needs data from a healthcare statistic service to provide a baseline for a normal cholesterol or vitamin D level for users of same age and same location. The network server may have access to the healthcare statistic service and is thus able to access data providing the baseline. The network server may then provide this information to the master application, and the user may be provided with comparative data.

The network server 100 may also be configured to notify via the client connection module 110 the user device application (i.e. the master application) when updated user data is available. In one example, the network server may also determine at least one criterion is fulfilled. If fulfilled, the network server 100 may send a notification to the master application or send some data to the master application. Alternatively or in addition, the network server 100 may also receive via the client connection module 110 a request from the user device application to receive updated user data.

Normally, each application installed in the user device 102A, 102B stores user data in the application and cloud storage extending the application. This means that data stored with the application relating to the user is usable only to the application itself. Further, a problem arises when a user decides to change a peripheral device (for example, a sports watch) to another similar one but from a different manufacturer. User data collected with the former device and its corresponding user device application is not available in the user device application of the latter device. The user may thus lose a significant amount of data that is no longer available for the user.

The network apparatus or server 100 disclosed above may enable storing user data from various sources to a single location. This data may then be made available to the master application 200 used by the user. In other words, instead of having separate applications in the user device to access user data stored in cloud services arranged separately for each application, the master application 200 now has access to all user data stored in the network apparatus 100. For example, even if the user changes a sports watch to another and a sports application to another, the data accumulated during the use of the previous sports watch is available to the user since the network apparatus 100 has stored this information earlier, and this information is available to the master application 200. For example, the user may use a first application for tracking running performance for one week. After the one week, the user decides to use the master application again for the same purpose. Normally, the performance data recorded with the first application would not be available for other applications. Now that the master application has access to the performance data recorded with the first application, the user is able, for example, to request to see the total running distance during the past month including also the data recorded with the first application.

Further, one or more of the disclosed embodiments may enable the user to have the ability to control the data stored about the user. For example, the user may lease personally generated data in a controlled manner. Since all user generated data regardless of the application with which the data was originally generated is stored in the network apparatus 100, the user is able to lease data to external entities in a controlled manner.

Further, one or more of the disclosed embodiments enable that when a master application is provided in a user's device and it has a connection to the disclosed network server that has access to one or more third party service providers storing user-related data, it is possible to determine one or more patterns that cannot be determined when one or more third party service provider applications (for example, a sports application, a heart rate measuring application) are installed in the user's device. When the user uses service provider specific applications installed in the user's device, the data relating to the user and obtained by the various applications is segmented with the plurality of applications. Further, one or more of the disclosed embodiments enable a solution where a single master application and its user interface can be used instead of using numerous user interfaces of the plurality of applications.

Further, currently a user may use different kinds of separate applications for different medical measurement devices. One or more of the disclosed embodiments may enable that when a single entity can access data stored by the separate applications, it is possible to spot patterns that can be extremely significant for the user.

Further, in one or more of the disclosed embodiments a doctor uses an application (i.e. the master application) which provides access to vital patient data. The data may comprise data related to an impact of specific medication and usage/dosage as a part of a healing treatment. The data may relate to vital functions such as breathing, heart rate or presence of specific element in the patient's blood. Over the period of years the measurement of these vital data elements of the patient has been done in different institutions using different equipment. But, for the doctor to make the best decision on medication dosage she/he will need access to the history data. When the patient has given access to the doctor (i.e. the patent has given access rights or trust for the doctor to his/her medical data the doctor has the ability to see the patients essential history data and is able to treat the patient in the best possible way. In the above example, the user would be the doctor, and data accessed by the doctors would be the patient's data and possible also data from a pharmaceutical company.

Further, in one or more of the disclosed embodiments a user uses a plurality of banking or payment services from a plurality of different services providers, for example, different forms of payments (bank card, credit card etc.) different digital wallets, different banks etc. Due to that, it is difficult for the user to determine how much money has been spent on various commodities. By using a master application that provides access to data store by a plurality of service providers (in this example, bank, credit card companies, digital wallet service providers etc.), the user is able to determine how much money he/she has spent on some commodity, for example, gasoline for his/her car etc.

Further, one or more of the disclosed embodiments enable a solution that prevents data loss. During the recent year, the user may have used several different applications to store similar data, for example, heart rate date. Normally, when the user changes to another application of the same purpose, data stored by the subsequently used application does not have access to the data generated by the previous application. By using the master application as illustrated above, the user is able to access data combined from several separate applications.

Further, one or more of the disclosed embodiments enable a solution that enables preventing data loss when moving from one device to another. Since the network server stored data generated by an earlier user device, a new user device taken into use after the earlier user device is able to access the previously store data with the master application.

The embodiments described hereinbefore may be used in any combination with each other. Several of the embodiments may be combined together to form a further embodiment. A product or a method, to which the invention is related, may comprise at least one of the embodiments described hereinbefore.

Computer executable instructions may be provided using any computer-readable media that is accessible by computing based device. Computer-readable media may include, for example, computer storage media such as memory and communications media. Computer storage media, such as memory, includes volatile and non-volatile, removable and non-removable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Therefore, a computer storage medium should not be interpreted to be a propagating signal per se. Propagated signals may be present in a computer storage media, but propagated signals per se are not examples of computer storage media. Although the computer storage media is shown within the computing-based device it will be appreciated that the storage may be distributed or located remotely and accessed via a network or other communication link, for example by using communication interface.

The term 'computer' or 'computing-based device' is used herein to refer to any device with processing capability such that it can execute instructions. Those skilled in the art will realize that such processing capabilities are incorporated into many different devices and therefore the terms 'computer' and 'computing-based device' each include PCs, servers, mobile telephones (including smart phones), tablet computers, set-top boxes, media players, games consoles, personal digital assistants and many other devices.

The methods described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible storage media include computer storage devices comprising computer-readable media such as disks, thumb drives, memory etc. and do not include propagated signals. Propagated signals may be present in a tangible storage media, but propagated signals per se are not examples of tangible storage media. The software can be suitable for execution on a parallel processor or a serial processor such that the method steps may be carried out in any suitable order, or simultaneously.

This acknowledges that software can be a valuable, separately tradable commodity. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Alternatively, or in addition, the functionality described herein (such as the encryption and the biometric recognition algorithm) can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), Graphics Processing Units (GPUs). For example, some or all of the device functionality or method sequences may be performed by one or more hardware logic components.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages.

The steps of the methods described herein may be carried out in any suitable order, or simultaneously where appropriate. Additionally, individual blocks may be deleted from any of the methods without departing from the spirit and scope of the subject matter described herein. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

It will be understood that the above description is given by way of example only and that with the advancement of technology, the basic idea of the invention may be implemented in various ways. The invention and its embodiments are thus not limited to the embodiments described above; instead they may vary within the scope of the claims.

## Claims

1. A system for managing user related data, the system comprising:
at least one data storage;
a connection module;
a third party service connector module for enabling a connection to at least one third party service comprising user related data;
wherein
the connection module is configured to receive access rights to at least one third party service;
the third party service connector module is configured to access the at least one third party service with the received access rights and to receive user related data from the at least one third party service using the received access rights;
the at least one data storage is configured to store the received user related data; and
the connection module is configured to enable access for a device application to the user related data stored in the at least one data storage.

2. A system of claim 1, wherein the connection module is configured to receive the access rights to the at least one third party service from the device application.

3. A system of claim 1, wherein the connection module is configured to receive the access rights to the at least one third party service from a network service providing a user account registration service.

4. A system of any of claims 1 - 3, wherein the network apparatus is configured to tag the stored user related data with a unique identifier identifying the user and masking the real user identity of the user.

5. A system of any of claims 1 - 4, wherein the system is configured to periodically request via the third party service connector module updated user related data from the third party service.

6. A system of any of claims 1 - 4, wherein the system is configured to receive via the third party service connector module updated user related data from the third party service and to update the user related data in the at least one data storage based on the received updated user related data.

7. A system of any of claims 5 - 6, wherein the system is configured to notify via the connection module the user device application when updated user related data is available.

8. A system of any of claims 1 - 4, wherein the system is configured to receive via the connection module a request from the device application to receive updated user related data.

9. A method for enabling access to at least one service, the method comprising:
receiving, by at least one processor, an indication of service solutions supported by a system accessible via a data network, the system storing user related data;
determining, by the at least one processor, service solutions supported by a device;
requesting from a user of the device, by the at least one processor, access rights to the service solutions supported by the device; and
causing transmission, by the at least one processor, of the obtained access rights relating to the service solutions supported by the device to the system to enable the system to access at least one third party service using the access rights and receive and store user related data from the at least one third party service.

10. A method of claim 9, wherein determining, by the at least one processor, service solutions supported by a device, comprises:
reading device data; and
determining the service solutions supported by the device based on the read device data.

11. A method of claim 9, wherein determining, by the at least one processor, service solutions supported by a user device, comprises:
providing an indication of the service solutions supported by the system to the user; and
receiving from the user a selection of at least one service solution supported by the system.

12. A method according to any of claims 9 - 11, further comprising:
detecting, by the at least one processor, an event in the usage of the device or a secondary device connected to the device; and
causing transmission, by the at least one processor, of a request to the system to access at least one third party service enabling the system to retrieve updated user related data from the at least one third party service.

13. A method according to claim 9 - 12, further comprising:
detecting, by the at least one processor, an action executed by the user with the device;
determining, by the at least one processor, that the action requires data stored relating to the user from the system;
causing transmission, by the at least one processor, of a request for the data stored relating to the user from the system; and
completing the action by using the data stored relating to the user using the data received from the system.

14. A computer program comprising instructions executable by a computing device to cause the computing device to:
receive an indication of service solutions supported by a system accessible via a data network, the system storing user related data;
determine service solutions supported by a device;
request from a user of the device access rights to the service solutions supported by the device; and
cause transmission of the obtained access rights relating to the service solutions supported by the device to the system to enable the system to access at least one third party service using the access rights and receive and store user related data from the at least one third party service.

15. A method for managing user related data, the method comprising:
receiving access rights to at least one third party service;
accessing the at least one third party service with the received access rights;
requesting user related data from the at least one third party service using the received access rights;
storing the received user related data in at least one data storage; and
enabling access for a device application to the user related data stored in the at least one data storage.

16. A computer program comprising instructions executable by a computing device to cause the computing device to:
receive access rights to at least one third party service;
access the at least one third party service with the received access rights;
request user related data from the at least one third party service using the received access rights;
store the received user related data in at least one data storage; and
enabling access for a device application to the user related data stored in the at least one data storage.

17. A system comprising:
a system according to any of claims 1 - 8; and
a device application configured to perform the method according to any of claims 9 - 13.
